(19) Europäisches Patentamt
European Patent Office
Office européen des brevets

(11) Veröffentlichungsnummer: **0 327 900 B1**

(12) **EUROPÄISCHE PATENTSCHRIFT**

(45) Veröffentlichungstag der Patentschrift:
28.08.91 Patentblatt 91/35

(51) Int. Cl.$^5$: **F02D 41/38, F02D 41/36,**
**F02D 35/02**

(21) Anmeldenummer: 89101392.2

(22) Anmeldetag: 27.01.89

(54) **Regeleinrichtung für Brennkraftmaschine.**

(30) Priorität: 12.02.88 DE 3804345

(43) Veröffentlichungstag der Anmeldung:
16.08.89 Patentblatt 89/33

(45) Bekanntmachung des Hinweises auf die
Patenterteilung:
28.08.91 Patentblatt 91/35

(84) Benannte Vertragsstaaten:
DE FR GB

(56) Entgegenhaltungen:
EP-A- 0 071 557
DE-A- 3 203 149
US-A- 4 446 723

(56) Entgegenhaltungen:
PATENT ABSTRACTS OF JAPAN, Band 10, Nr.
44 (M-455)[2101], 21. Februar 1986; & JP-A-60
195 349 (TOYOTA JIDOSHA K.K.) 03.10.1985
PATENT ABSTRACTS OF JAPAN, Band 3, Nr.
33 (M-52), 20. März 1979; & JP-A-548 230 (NIP-
PON TOKUSHU TOGYO K.K.) 22.01.1979

(73) Patentinhaber: ROBERT BOSCH GmbH
Postfach 10 60 50
W-7000 Stuttgart 10 (DE)

(72) Erfinder: Bechtold, Günter, Dr. Dipl.-Phys.
Sommerhaldenstrasse 36A
W-7000 Stuttgart 1 (DE)
Erfinder: Grob, Ferdinand, Dipl.-Ing.
Friedrich-Schelling-Weg 8
W-7122 Besigheim (DE)
Erfinder: Möller, Heinz, Dipl.-Ing.
Rastatter Strasse 30
W-7000 Stuttgart 31 (DE)

**Beschreibung**

Regeleinrichtung für Brennkraftmaschine

Stand der Technik

Die Erfindung betrifft eine Einrichtung zur Regelung einer selbstzündenden Brennkraftmaschine gemäß dem Oberbegriff des Anspruchs 1. Eine solche Einrichtung zur Regelung einer selbstzündenden Brennkraftmaschine ist aus der DE-OS 3336028 bekannt. Dort wird eine Einrichtung beschrieben, bei der jedem Zylinder die Kraftstoffmenge so zugemessen wird, daß jeder Zylinder das gleiche Drehmoment abgibt. Die Korrektur erfolgt abhängig von dem zylinderspezifischen Drehmomentsignal.

Des weiteren ist in der DE-OS 3203149 ein spezieller Temperaturfühler in Verbindung mit einer Zünd- bzw. Glühkerze beschrieben, der zur Steuerung von Vorgängen im Brennraum von Brennkraftmaschinen dienen kann.

Vorteile der Erfindung

Die erfindungsgemäße Einrichtung hat demgegenüber den Vorteil, daß das Betriebsverhalten einer selbstzündenden Brennkraftmaschine verbessert werden kann, ohne daß zusätzliche Sensoren notwendig sind. Die Kraftstoffeinspritzung wird nach Anspruch 1 zylinderspezifisch so geregelt, daß die Verbrennung und/oder der Verbrennungsverlauf in den einzelnen Zylindern mit den Sollwerten übereinstimmt.

Die zylinderspezifische Regelung erfolgt durch Auswertung der Brennraumtemperaturen. Auf diese Weise kann mit relativ geringem Aufwand auf die Verbrennung im Brennraum geschlossen werden.

Besonders bevorzugt wird eine Ausführungsform, bei der zur Erfassung der Brennraumtemperatur die Glühkerzen herangezogen werden, die ohnehin bei einer selbstzündenden Brennkraftmaschine vorgesehen sind und keinen zusätzlichen Temperaturfühler enthalten. Dadurch läßt sich das Betriebsverhalten des Motors mit minimalem Aufwand verbessern.

Weitere Vorteile und Ausführungsformen ergeben sich aus den in den Unteransprüchen genannten Merkmalen. Besonders vorteilhaft ist es, daß am Aufbau der Brennkraftmaschine und der Glühkerzen keine Änderungen vorgenommen zu werden brauchen, sondern daß lediglich die Motorregelung so ausgelegt werden muß, daß die Temperatursignale zur zylinderspezifischen Regelung der Kraftstoffeinspritzung ausgewertet werden.

Es hat sich als besonders vorteilhaft herausgestellt, daß für dieses Verfahren herkömmliche Glühkerzen verwendet werden können.

Zeichnung

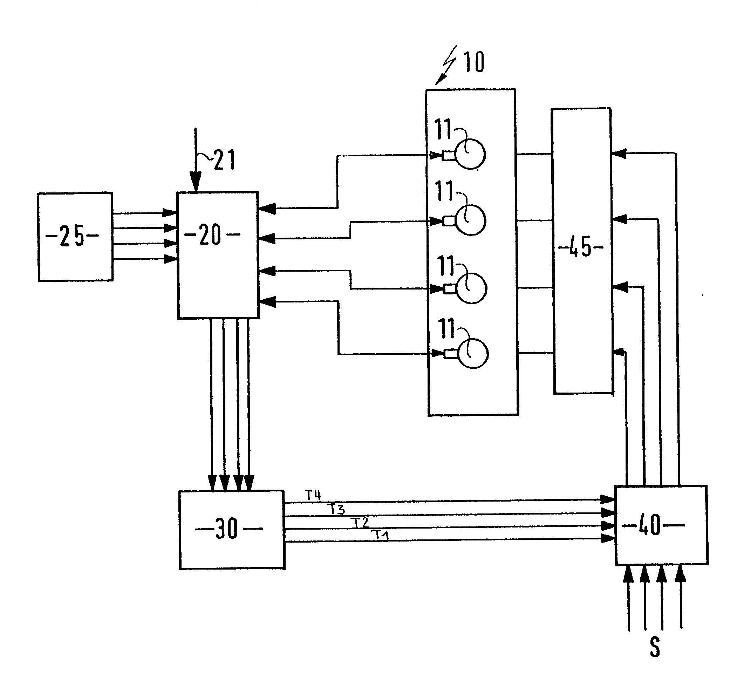

Ein Ausführungsbeispiel der Erfindung ist in der Zeichnung dargestellt und in der nachfolgenden Beschreibung näher erläutert. Die Figur 1 zeigt eine schematische Darstellung der Einrichtung zur Regelung einer selbstzündenden Brennkraftmaschine.

Beschreibung der Ausführungsbeispiele

In der Figur 1 ist mit 10 eine Brennkraftmaschine bezeichnet. Jede der Glühkerzen 11 ist mit der Umschalteinrichtung 20 verbunden. Je nach Schaltstellung des Umschalters werden die Glühkerzen mit dem Ausgangsstrom der Glühstromversorgung 25 beaufschlagt, oder die Glühkerzen stehen mit der Temperaturmessung 30 in Verbindung. Deren Ausgangssignale werden zu einer an sich bekannten Steuereinrichtung 40 zur zylinderspezifischen Kraftstoffzumessung weitergeleitet. Dieser Steuereinrichtung 40 werden zusätzlich verschiedene Größen S zugeführt, und ihre Ausgangssignale gelangen zur Einspritzpumpe 45. Die Schalterstellung des Umschalters wird über ein Signal auf einer Leitung 21 gesteuert und hängt vom Betriebszustand der Brennkraftmaschine ab. In der Startphase und Warmlaufphase sind die Glühkerzen mit der Glühstromversorgung 25 verbunden, die Glühkerzen üben ihre normale Funktion aus. Nach der Startphase und der Warmlaufphase wird die Temperatur in den Brennräumen mit Hilfe der jetzt als Temperatursensoren dienenden Glühkerzen 11 (Glühstiftkerzen bzw. Glühdrahtkerzen) erfaßt. Dazu können herkömmliche Glühkerzen verwendet werden, die eine temperaturabhängige Glühwendel haben oder auch solche Kerzen, die neben einer Heizwendel aus temperaturunabhängigem Material auch eine Regelwendel aus temperaturabhängigem Material aufweisen. Es können auch Glühkerzen eingesetzt werden, die aufgrund der verwendeten Materialien wie Thermoelemente wirken und eine temperaturabhängige Spannung abgeben. Die Widerstandsänderung in Abhängigkeit von der Temperatur bzw. die temperaturabhängige Spannung wird erfaßt und so die Temperatur der einzelnen Glühkerzen ermittelt.

Die Temperaturmessung 30 wird bei einer Ausführungsform der Einrichtung dadurch ausgeführt, daß die Glühkerzen mit einem konstanten und niedrigen Strom gespeist werden, der nicht zur Eigenerwärmung der Kerzen führt. Die dabei an den Kerzen abfallende Spannung dient als Maß für die Glühkerzentemperatur.

Bei einer weiteren Ausführungsform der Einrichtung wird die Temperatur der Kerzen dadurch ermittelt, daß an die Glühkerzen eine ebenfalls ausreichend niedrige, also nicht zur Eigenerwärmung führende konstante Spannung angelegt wird und der Strom als Maß für die Kerzentemperatur herangezogen wird.

Bei einer anderen Ausführungsform der Einrichtung wird die Temperatur der Kerzen dadurch ermittelt, daß die Thermospannung der Glühkerzen als Maß für die Kerzentemperatur herangezogen wird.

Die so gewonnenen Temperatursignale werden zu der an sich bekannten Steuereinrichtung 40 für die zylinderspezifische Kraftstoffzumessung weitergeleitet. Von der Temperatur kann auf die Energieumsetzung in den zugehörigen Zylindern geschlossen und ein Vergleich durchgeführt werden. Durch die Steuereinrichtung 40 wird die Kraftstoffeinspritzung (eingespritzte Kraftstoffmenge, Spritzbeginn, Einspritzdauer und Einspritzverlauf) individuell so geregelt, daß der Energieumsatz und damit die Brennraumtemperatur in allen Zylindern mit den Sollwerten übereinstimmt. Diese Regelung kann kontinuierlich durchgeführt werden oder über Bildung von Meßfenstern auf bestimmte Betriebspunkte begrenzt werden.

## Patentansprüche

1. Einrichtung zur Regelung der Kraftstoffeinspritzung einer selbstzündenden Brennkraftmaschine mit Glühkerzen (11) in den einzelnen Brennräumen, die wenigstens während der Startphase in einen Glühstromkreis (25) schaltbar sind, und mit einer zylinderspezifischer Regelung der Kraftstoffeinspritzung zur Gleichstellung der Drehmomentbeträge der einzelnen Zylinder, wobei außerhalb der Startphase die Glühkerzen zur Messung der Temperatur in einen Temperaturmeßkreis schaltbar sind und die zylinderspezifischen Temperatursignale ($T_1$ bis $T_4$) als Eingangssignale der Steuereinrichtung (40) zur zylinderspezifischen Regelung der Kraftstoffeinspritzung dienen.

2. Einrichtung nach Anspruch 1, dadurch gekennzeichnet, daß Glühkerzen mit Regelwendel verwendet werden.

3. Einrichtung nach Anspruch 1, dadurch gekennzeichnet, daß die zwischen den unterschiedlichen Materialien der Glühkerzen auftretende Thermospannung zur Temperaturmessung verwendet wird.

## Claims

1. Device for regulating the fuel injection of a self-igniting internal combustion engine having heater plugs (11) in the individual combustion spaces which can be connected into a heating circuit (25) at least during the starting phase, and comprising a cylinder-specific regulation of the fuel injection for setting the torque amounts of the individual cylinders to be equal, in which arrangement the heater plugs can be connected into a temperature sensing circuit for sensing the temperature outside the starting phase and the cylinder-specific temperature signals ($T_1$ to $T_4$) are used as input signals of the control device (40) for the cylinder-specific regulation of the fuel injection.

2. Device according to Claim 1, characterised in that heater plugs with regulating spirals are used.

3. Device according to Claim 1, characterised in that the thermoelectric voltage occurring between the different materials of the heater plugs is used for temperature sensing.

## Revendications

1. Dispositif pour la régulation de l'injection de carburant d'un moteur à combustion interne à auto-allumage avec des bougies à incandescence (11) dans les différentes chambres de combustion, bougies qui, au moins pendant la phase de démarrage, sont susceptibles d'être branchées sur un circuit de courant d'incandescence (25), et avec une régulation spécifique par cylindre de l'injection de carburant pour l'égalisation des valeurs des couples des différents cylindres, tandis qu'en dehors de la phase de démarrage, les bougies à incandescence sont susceptibles d'être branchées, pour la mesure de la température, sur un circuit de mesure de la température, et les signaux de température spécifiques par cylindre ($T_1$ à $T_4$) sont utilisés comme signaux d'entrée du dispositif de commande (40) pour la régulation spécifique par cylindre de l'injection de carburant.

2. Dispositif selon la revendication 1, caractérisé en ce qu'on utilise des bougies à incandescence avec une spire de réglage.

3. Dispositif selon la revendication 1, caractérisé en ce que la tension thermo-électrique prenant naissance entre les différents matériaux des bougies à incandescence, est utilisée pour la mesure de la température.

EP 0 327 900 B1